(19)

Europäisches
Patentamt
European
Patent Office
Office européen
des brevets

(11) **EP 2 536 795 B1**

(12) **EUROPÄISCHE PATENTSCHRIFT**

(45) Veröffentlichungstag und Bekanntmachung des Hinweises auf die Patenterteilung:
**30.12.2015 Patentblatt 2015/53**

(21) Anmeldenummer: **11705511.1**

(22) Anmeldetag: **18.02.2011**

(51) Int Cl.:
***C09D 5/36*** *(2006.01)*          ***C09D 7/00*** *(2006.01)*
***C09D 7/12*** *(2006.01)*          *C08K 3/34* *(2006.01)*
*C08L 33/08* *(2006.01)*          *C08L 33/10* *(2006.01)*
*C08L 75/04* *(2006.01)*

(86) Internationale Anmeldenummer:
**PCT/EP2011/052466**

(87) Internationale Veröffentlichungsnummer:
**WO 2011/101455 (25.08.2011 Gazette 2011/34)**

(54) **WÄSSRIGE, MIT BLÄTTCHENFÖRMIGEN METALLEFFEKTPIGMENTEN PIGMENTIERTE BESCHICHTUNGSMITTEL, VERFAHREN ZU DEREN HERSTELLUNG UND DEREN VERWENDUNG ZUR HERSTELLUNG VON MEHRSCHICHTLACKIERUNG**

AQUEOUS COATING COMPOSITIONS PIGMENTED WITH FLAKE-FORM METALLIC EFFECT PIGMENTS, PROCESSES FOR PREPARING THEM AND USE THEREOF FOR PRODUCING MULTICOAT PAINT FINISH

MOYENS DE REVÊTEMENT PIGMENTÉ AQUEUX COMPRENANT DES PIGMENTS À EFFET MÉTALLIQUE EN FORME DE PAILLETTES, LEUR PROCÉDÉ DE PRODUCTION ET LEUR UTILISATION POUR FABRIQUER UNE PEINTURE MULTICOUCHE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **18.02.2010 DE 102010008541**

(43) Veröffentlichungstag der Anmeldung:
**26.12.2012 Patentblatt 2012/52**

(73) Patentinhaber: **BASF Coatings GmbH**
**48165 Münster (DE)**

(72) Erfinder:
• **SCHWARTE, Stephan**
**48282 Emsdetten (DE)**

• **UEKÖTTER, Ulrich**
**48159 Münster (DE)**
• **SONNTAG, Peter**
**48351 Everswinkel (DE)**
• **LÖW, Norbert**
**91413 Neustadt/Aisch (DE)**
• **ROEHR, Elke**
**97299 Zell am Main (DE)**

(74) Vertreter: **Leifert & Steffan**
**Patentanwälte**
**Postfach 10 40 09**
**40031 Düsseldorf (DE)**

(56) Entgegenhaltungen:
WO-A1-2009/100938          WO-A2-02/053658
WO-A2-2007/050295

**Beschreibung**

Die vorliegende Erfindung betrifft wässrige, pigmentierte Beschichtungsmittel, deren Herstellung und Verwendung zur Herstellung von Mehrschichtlackierungen sowie ein Verfahren zur Herstellung von Mehrschichtlackierungen und Mehrschichtlackierungen, die nach diesem Verfahren erhalten werden.

Die seit langem bekannten wässrigen oder lösemittelhaltigen Beschichtungsstoffe, insbesondere die sogenannten Basislacke, und die hiermit hergestellten mehrschichtigen, effektgebenden Lackierungen weisen im wesentlichen gute anwendungstechnische Eigenschaften auf.

Die stetig wachsenden technischen und insbesondere ästhetischen Ansprüche des Marktes, vor allem der Automobilhersteller und ihrer Kunden, erfordern aber eine stetige Weiterentwicklung des bisher erreichten technischen und ästhetischen Niveaus. Modernes Karosserie-Design mit seinen ausgeprägten Rundungen harmoniert sehr gut mit Lackierungen mit starkem Flip-Flop-Effekt. Der Wunsch einen metallähnlichen Effekt zu erzeugen, lässt sich durch den Einsatz von sehr dünnen, im Nanometer-Bereich liegenden Aluminium-Blättchen realisieren wie sie beispielsweise in der EP 0826745 A2 beschrieben sind.

Insbesondere besteht ein Bedarf an neuen Beschichtungsmitteln, die es gestatten, Basislackierungen herzustellen, die ein besonders stark ausgeprägtes Hell-Dunkel-Verhalten aufweisen. Dabei sollen aber die durch die bekannten Basislacke und die hieraus hergestellten Basislackierungen erzielten Vorteile nicht verloren gehen, sondern zumindest in der gleichen, vorzugsweise einer stärkeren, Ausprägung erhalten bleiben.

Die entsprechenden effekt- und gegebenenfalls auch farbgebenden Basislackierungen sollen daher insbesondere einen guten Haze, d.h. keinen Glanzschleier, einen guten Verlauf sowie einen sehr guten optischen Gesamteindruck (Appearance) besitzen. Ferner sollen die Basislackierungen frei von Lackstörungen, Hell-Dunkel-Schattierungen (Wolken) und Stippen sein. Darüber hinaus sollen die resultierenden Beschichtungen keine optischen Fehlstellen aufweisen und eine zufriedenstellende Haftung zum Klarlack besitzen.

Außerdem sollen sich die Beschichtungsmittel durch eine gute Lagerstabilität auszeichnen, d.h. dass auch bei Lagerung der Beschichtungsmittel bei 40 °C (für 28 Tage) keine signifikante Verschlechterung der Eigenschaften sowohl der Beschichtungsmittel als auch der aus diesen gelagerten Beschichtungsmitteln hergestellten Beschichtungen auftritt. So soll keine signifikante Verschlechterung der rheologischen Eigenschaften der Beschichtungsmittel, insbesondere kein signifikanter Viskositätsanstieg, und keine Stippenbildung und keine signifikante Verschlechterung des metallischen Flops auftreten.

Gewöhnliche Wasserbasislacke des Stands der Technik sind einfach herzustellen, lagerstabil und transportfähig. Sie erfüllen hinsichtlich Applikation, technologischen Eigenschaften (Haftung, Langzeitbewitterung), Lager- und Ringleitungsstabilität sowie Appearance die in der Automobillackierung üblichen Anforderungen.

Die WO 2009/100938 A1 offenbart Beschichtungsmittelzusammensetzungen auf Wasserbasis, umfassend mindestens eine Harzzusammensetzung und als Rheologiehilfsmittel mindestens ein Polyamid und mindestens einen Acrylatverdicker auf Poly(meth)acrylsäure-Basis. Entsprechende Beschichtungszusammensetzungen eignen sich zur Herstellung von farb- und/oder effektgebenden Beschichtungszusammensetzungen.

Die EP 1 591 492 A1 beschreibt beispielsweise einen Metallpigmente enthaltenden Basislack, der wässrig oder lösemittelbasiert sein kann und welcher einen relativ hohen Anteil des Metallpigments - vorzugsweise 12 bis 20 Gew.-% bezogen auf den Gesamtbindemittelgehalt - enthält. Der Fokus der EP 1 591 492 A1 liegt jedoch darin möglichst feuchtigkeitsstabile Systeme bereitzustellen.

Die WO 02/053658 A2 beschreibt einen wässrigen, effektgebenden Beschichtungsstoff, ein Verfahren zu seiner Herstellung und seine Verwendung. Der wässrige, effektgebende Beschichtungsstoff enthält mindestens ein in Wasser lösliches oder dispergierbares Bindemittel, mindestens ein Effektpigment und ein neutralisiertes Gemisch aus mindestens zwei Fettsäuren.

In der WO 2006/017197 A1 wird ein Verfahren zur Herstellung von Spezialeffektlackierungen offenbart, bei welchem relativ niedrige Anteile eines blättchenförmigen Metallpigments bei vergleichsweise hohen Bindemittelmengen und Festkörperanteilen zur Herstellung eines Effektlacks eingesetzt werden, wobei neben dem blättchenförmigen Metallpigment mindestens ein weiteres zusätzliches Spezialeffektpigment im Lack einzusetzen ist.

Das metallische Hell-Dunkel-Verhalten (als Flop, metallischer Flop oder Flip-Flop bezeichnet) von lösemittelbasierenden Basislacken wie sie beispielsweise für Felgenlackierungen eingesetzt werden, wird jedoch bei Verwendung von Effektpigmente enthaltenden Wasserbasislacken zumeist bei weitem nicht erreicht.

Zur Erreichung eines möglichst guten Flip-Flop-Effekts werden im Stand der Technik unter anderem PVD-Aluminium-Blättchen als Pigmente in der Metallic-Lack-Herstellung verwendet, wobei die genaue Abstimmung des Gehalts der weiteren Komponenten im wässrigen Lacksystem von entscheidender Bedeutung ist. So sind physikalisch, thermisch und physikalisch und thermisch härtbare, Metalleffektpigmente enthaltende wässrige Zusammensetzungen, die einfach herzustellen sind und viele Anforderungen aktueller wässriger Fahrzeuglacke erfüllen und die darüber hinaus einen ausgeprägten Flip-Flop-Effekt aufweisen, aus der WO 2008/141768 A1 bekannt.

Die in der WO 2008/141768 A1 beschriebenen Beschichtungsstoffe eignen sich als Wasserbasislacke für die Herstellung effektgebender oder farb- und effektgebender Basislackierungen von Mehrschichtlackierungen und weisen ein gutes Applikationsverhalten sowie einen hervorragenden Verlauf auf. Sie können auch in dünnen Schichten und vergleichsweise niedrigen Metalleffektpigmentkonzentrationen ein hohes Deckvermögen, eine gute Zwischenschichthaftung, eine besonders hohe Schwitzwasserbeständigkeit, eine isotrope Pigmentverteilung, ein ganz besonders stark ausgeprägtes Hell-Dunkel-Verhalten sowie eine sehr hohe metallische Brillanz und einen sehr hohen Glanz zeigen. Auch sind die in der WO 2008/141768 A1 offenbarten Beschichtungsstoffe weitgehend frei von Lackstörungen, wie Hell-Dunkel-Schattierungen (Wolken) und Stippen. Sie weisen zudem eine chromähnliche Spiegelwirkung auf und sofern sie auch farbgebend sind, einen besonders eleganten, effektvollen Farbeffekt mit geringem Sparkle-Effekt (Glitzereffekt).

Für bestimmte Anwendungen kann jedoch eine zu ausgeprägte Spiegelwirkung der Beschichtungen von Nachteil sein, so zum Beispiel in stark anschmutzungsanfälliger Umgebung, wo eine Anschmutzung der Beschichtung durch die Spiegelwirkung verstärkt erscheinen kann. Des Weiteren besteht ein Bedarf an wässrigen Beschichtungsstoffen, die auch nach einer Belastung im Schwitzwasserkonstantklima-Test eine hervorragende Haftfestigkeit besitzen, die nicht zur Blasenbildung neigen und eine möglichst hohe Glanzerhaltung aufweisen. Insbesondere soll eine hervorragende Haftung zu Einkomponenten-Klarlacken (1K-Klarlacken) bestehen und das Deckvermögen optimiert werden. Ein weiterer, durch die vorliegende Erfindung zu überwindender Nachteil des Stands der Technik liegt in der nicht zufriedenstellenden Untergrundabdeckung. Für die Eignung als OEM-Serienlack ist es von großer Bedeutung, dass Untergrundstörungen, wie Schleifflecken, Schleiffriefen und Polierflecken oder Greiferabdrucke durch das Fließband beziehungsweise Umsetzmaschinen gut abgedeckt werden.

Es wurde gefunden, dass die obigen Anforderungen erfüllt werden, indem thermisch und/oder physikalisch härtbare wässrige Beschichtungsmittel-Zusammensetzungen zur Verfügung gestellt werden, die

A) mindestens ein Polyurethan, gewählt aus der Gruppe, bestehend aus physikalisch härtbaren, thermisch selbstvernetzenden und/oder thermisch fremdvernetzenden, gesättigten, ungesättigten und/oder mit olefinisch ungesättigten Verbindungen gepfropften, ionisch und/oder nichtionisch stabilisierten Polyurethanen, als Bindemittel
B) mindestens ein blättchenförmiges, nicht über ein PVD-Verfahren hergestelltes Metalleffektpigment und
C) mindestens einen anorganischen Verdicker C1) gewählt aus der Gruppe der Schichtsilikate und mindestens einen organischen Verdicker C2) gewählt aus der Gruppe der (Meth)acrylsäure-(Meth)acrylat-Copolymerisat-Verdicker und Polyurethanverdicker,

enthalten, wobei

i) der Gehalt an B), bezogen auf den Bindemittelgehalt der Beschichtungsmittel-Zusammensetzung > 9 Gew.-%, vorzugsweise > 11 Gew.-% und besonders bevorzugt > 13 Gew % ist,
ii) der Gesamtfestkörper bezogen auf die Beschichtungsmittel-Zusammensetzung 12,5 Gew.-% bis 17,0 Gew.-% beträgt,
iii) der Gesamtgehalt der Verdicker aus C1) und C2), bezogen auf den Bindemittelgehalt der Beschichtungszusammensetzung < 12,5 Gew.-%, vorzugsweise < 11 Gew.-% und besonders bevorzugt < 9,5 Gew.-% beträgt und
iv) das Gewichtsverhältnis C2) zu C1) > 0,4, vorzugsweise > 0,5 beträgt und
v) der Gehalt an B), bezogen auf die Beschichtungsmittel-Zusammensetzung 1,2 bis 2,3 Gew.-% beträgt.

Als "Bindemittel" wird hierin abweichend von der DIN EN ISO 4818 nur der nichtflüchtige Anteil der Beschichtungsmittelzusammensetzung ohne Pigmente, ohne Füllstoffe und abzüglich der Verdicker C1) und C2) bezeichnet. Der nichtflüchtige Anteil, ist der Massenrückstand, der nach Verdunsten bei 120 °C über die Dauer von 60 Minuten zurückbleibt. Vom nichtflüchtigen Anteil werden die Massenanteile an Pigmenten, Füllstoffen und Verdickern C1) und C2) gemäß Einwaage abgezogen.

Die Begriffe (Meth)acrylsäure beziehungsweise (Meth)acrylat umfassen in dieser Schrift Methacrylsäure und Acrylsäure beziehungsweise Methacrylat und Acrylat.

Die erfindungsgemäßen Beschichtungsmittel-Zusammensetzungen werden im Folgenden auch als »erfindungsgemäße Zusammensetzungen« bezeichnet.

Weiterer Gegenstand der vorliegenden Erfindung ist ein Verfahren zur Herstellung der erfindungsgemäßen Beschichtungsmittel-Zusammensetzungen, wobei die Beschichtungsmittel-Bestandteile vermischt werden und die resultierende Mischung homogenisiert wird. Dieses Verfahren wird im Folgenden als »erfindungsgemäßes Verfahren« bezeichnet.

Nicht zuletzt ist weiterer Gegenstand der Erfindung die Verwendung der erfindungsgemäßen Zusammensetzungen und der nach dem erfindungsgemäßen Verfahren hergestellten erfindungsgemäßen Zusammensetzungen als Beschichtungsstoff, insbesondere als Lack, vorzugsweise als Basislack. Diese Verwendung wird als »erfindungsgemäße Verwendung« bezeichnet.

Weitere Erfindungsgegenstände gehen aus der Beschreibung hervor und umfassen insbesondere ein Verfahren zur Herstellung einer Mehrschichtlackierung sowie nach dem Verfahren hergestellte Mehrschichtlackierungen.

Im Hinblick auf den Stand der Technik war es überraschend und für den Fachmann nicht vorhersehbar, dass die Aufgabe, die der vorliegenden Erfindung zugrunde lag, mit Hilfe der erfindungsgemäßen Zusammensetzungen, des erfindungsgemäßen Verfahrens, der erfindungsgemäßen Verwendung und besonders der erfindungsgemäßen Mehrschichtlackierungen gelöst werden konnte.

Insbesondere war es überraschend, dass die erfindungsgemäßen Zusammensetzungen auch bei stark wechselnden Temperaturen lagerstabil und transportfähig sind. Dabei kommt es auch nicht zu einer Gasentwicklung. Auch nach langer Scherung zeigten sie keine Absetzung von Metalleffektpigmenten oder anderen Bestandteilen.

Die Beschichtungsstoffe eignen sich hervorragend als Wasserbasislacke für die Herstellung effektgebender oder farb- und effektgebender Basislackierungen von Mehrschichtlackierungen. Dabei zeigten sie ein vorzügliches Applikationsverhalten, selbst mit elektrostatischen Applikationsverfahren (wie ESTA) und einen hervorragenden Verlauf.

Die effektgebenden und farb- und effektgebenden Basislackierungen weisen auch in vergleichsweise dünnen Schichten und vergleichsweise niedrigen Metalleffektpigmentkonzentrationen ein hohes Deckvermögen, eine hervorragende Zwischenschichthaftung, insbesondere eine hohe Haftung gegenüber Einkomponenten-Klarlacken, eine besonders hohe Schwitzwasserbeständigkeit, eine isotrope Pigmentverteilung, ein ganz besonders stark ausgeprägtes Hell-Dunkel-Verhalten (metallischer Flop), eine sehr hohe metallische Brillanz und einen sehr hohen Glanz auf. Dabei sind sie frei von Lackstörungen, wie Hell-Dunkel-Schattierungen (Wolken) und Stippen. Insgesamt zeigen sie sogar eine chromähnliche Spiegelwirkung und besitzen, sofern sie auch farbgebend sind, einen besonders eleganten, effektvollen Farbeffekt mit geringem Sparkle-Effekt (Glitzereffekt).

Die erfindungsgemäßen Zusammensetzungen enthalten mindestens ein Polyurethan (A) als Bindemittel.

Das Polyurethan (A) ist aus der Gruppe, bestehend aus physikalisch härtbaren, thermisch selbstvernetzenden und/oder thermisch fremdvernetzenden, gesättigten, ungesättigten und/oder mit olefinisch ungesättigten Verbindungen gepfropften, ionisch und/oder nichtionisch stabilisierten Polyurethan-Harzen, ausgewählt.

Zu den Eigenschaften »physikalisch härtbar«, »thermisch selbstvernetzend« und »thermisch fremdvernetzend« sowie zu den stofflichen Voraussetzungen, die diesen Eigenschaften zu Grunde liegen wird auf die deutsche Patentanmeldung DE 100 10 416 A1, Seite 3, Zeilen 11 bis 30, und Seite 5, Zeilen 33 bis 41, und Seite 5, Zeile 47, bis Seite 8, Zeile 6, verwiesen. Das dort im Zusammenhang mit (Meth)Acrylat(co)polymerisaten Erläuterte gilt hier sinngemäß.

»Physikalisch härtbar« bedeutet demnach, dass keine Vernetzungsmittel zur Härtung erforderlich sind, sondern eine Härtung durch Lösemittel-Abgabe aus der applizierten Schicht erfolgt. Dabei erfolgt die Verknüpfung üblicherweise über Schlaufenbildung zwischen den Polymermolekülen, deren Molekulargewicht sich dabei nicht ändert. Die physikalische Härtung kann auch durch die Koaleszenz von Bindemittelteilchen erfolgen, wie dies häufig bei Dispersionen der Fall ist (vgl. Römpp Lexikon Lacke und Druckfarben, Georg Thieme Verlag, Stuttgart, New York, 1998, Seiten 274 und 275: "Härtung").

Die Bindemittel können auch »thermisch selbstvernetzend« und/oder »thermisch fremdvernetzend« härtbar sein. Im Rahmen der vorliegenden Erfindung bezeichnet der Begriff "selbstvernetzend" die Eigenschaft eines Bindemittels, mit sich selbst Vernetzungsreaktionen einzugehen. Voraussetzung hierfür ist, dass in den Bindemitteln bereits beide Arten von komplementären reaktiven funktionellen Gruppen enthalten sind, die für eine Vernetzung notwendig sind. Als "fremdvernetzend" werden dagegen solche Beschichtungsstoffe bezeichnet, worin die eine Art der komplementären reaktiven funktionellen Gruppen in dem Bindemittel, und die andere Art in einem Härter oder Vernetzungsmittel - sofern vorliegend mitverwendet - vorliegen. Ergänzend wird hierzu auf Römpp Lexikon Lacke und Druckfarben, Georg Thieme Verlag, Stuttgart, New York, 1998, "Härtung", Seiten 274 bis 276, insbesondere Seite 275, unten, verwiesen.

Vorzugsweise ist das Polyurethan (A) thermisch fremdvernetzend. Die thermische Vernetzung oder Härtung kann noch durch die physikalische Härtung des Polyurethans (A) unterstützt werden.

Das Polyurethan (A) kann auch mit olefinisch ungesättigten Verbindungen gepfropft sein. Zur Herstellung solcher gepfropften Polyurethane wird besonders bevorzugt als Pfropfbasis ein ungesättigtes, vorzugsweise olefinisch ungesättigtes, Polyurethan (A) verwendet. Ganz besonders bevorzugt enthält das olefinisch ungesättigte Polyurethan (A) terminale und laterale, insbesondere laterale, olefinisch ungesättigte Gruppen.

Ganz besonders bevorzugt ist das Polyurethan (A) ionisch, insbesondere anionisch, stabilisiert. Vor allem werden dazu Carboxylatgruppen verwendet.

Beispiele geeigneter Polyurethane (A) sind aus den deutschen Patentanmeldungen

- DE 40 09 858 A1, Spalte 6, Zeile 18, bis Spalte 10, Zeile 23,
- DE 44 37 535 A1, Seite 2, Zeile 27, bis Seite 6, Zeile 22,
- DE 199 14 896 A1, Spalte 4, Zeile 26, bis Spalte 11, Zeile 5,
- DE 100 43 405 C1, Spalte 5, Absatz [0030],
- DE 199 48 004 A1, Seite 3, Zeile 14, bis Seite 13, Zeile 48,
- DE 100 53 890 A1, Spalte 3, Absatz [0016], bis Spalte 18, Absatz [0123], oder

- DE 102 23 652 A1, Spalte 3, Absatz [0019], bis Spalte 16, Absatz [0101]

bekannt.

Der Gehalt an Polyurethan-Bindemittel (A) wird vorzugsweise so eingestellt, dass in den erfindungsgemäßen Zusammensetzungen das Gewicht der blättchenförmigen Metalleffektpigmenten (B) bezogen auf den Bindemittelgehalt in der erfindungsgemäßen Zusammensetzung 9,1 - bis 20 Gew.-%, vorzugsweise 11,1 bis 19,5 Gew.-%, besonders bevorzugt 12,1 bis 19 Gew.-% und ganz besonders bevorzugt 13 bis 17,0 Gew.-% beträgt.

Neben den zwingend enthaltenen Polyurethanbindemittel(n) (A) können auch weitere Harze wie beispielsweise Polyesterharze oder Poly(meth)acrylatharze in der erfindungsgemäßen Beschichtungsmittelzusammensetzung enthalten sein. Der Bindemittelgehalt der erfindungsgemäßen Zusammensetzung beträgt vorzugsweise mindestens 11,0 Gew.-%, besser mindestens 11,5 Gew.-%, besonders bevorzugt 12,0 bis 14,5 Gew.-% und ganz besonders bevorzugt 12,2 bis 13,5% Gew.-% bezogen auf das Gesamtgewicht der erfindungsgemäßen Zusammensetzung.

Vorzugsweise beträgt der Gehalt an Bindemittel (A) bezogen auf den Bindemittelgehalt (der wie oben angegeben ohne den Anteil an Verdickungsmitteln C1) und C2) sowie ohne Pigmente und ohne Füllstoffe definiert ist) wenigstens 30 Gew.-%, besonders bevorzugt mindestens 37,5 Gew.-% oder sogar über 42,5 Gew.-%.

Die erfindungsgemäßen Zusammensetzungen enthalten mindestens ein blättchenförmiges Metalleffektpigment (B). Überraschenderweise werden als blättchenförmige Metalleffektpigmente (B) in den erfindungsgemäßen Zusammensetzungen solche Metalleffektpigmente eingesetzt, die nicht wie in der WO 2008/141768 A1 über PVD-Verfahren (Physical Vapour Deposition) hergestellt sind. Dies schließt jedoch den zusätzlichen Einsatz von PVD-Pigmenten nicht per se als Zumischungsbestandteil der erfindungsgemäßen Zusammensetzungen nicht aus. Bei den PVD-Verfahren handelt es sich um Vakuumbeschichtungsverfahren zur Herstellung dünner Schichten, bei denen das Metall, insbesondere Aluminium, durch rein physikalische Methoden in die Gasphase überführt wird, um dann auf dem Substrat abgeschieden zu werden (vgl. Römpp Online, Georg Thieme Verlag, 2004, »PVD-Verfahren«). Das Verfahren ist im Vergleich zur Herstellung anderer Metalleffektpigmente aufwändiger. Ebenfalls als von (B) zu unterscheidende Zumischung in untergeordneter Menge können sogenannte "Cornflake-Pigment-Typen" eingesetzt werden.

Es hat sich gezeigt, dass zur Lösung der der Erfindung zugrunde liegenden Aufgaben der Einsatz von blättchenförmigen Metalleffektpigmenten (B) mit sogenannter Silberdollar-Morphologie besonders vorteilhaft ist. Typische Pigmente mit Silberdollar-Morphologie werden aus einem speziellen Metallgrieß mit sphärischer Morphologie hergestellt, der beim anschließenden Mahlen lediglich verformt und nicht zerkleinert wird. Besonders bevorzugt sind Silberdollar-Pigmente aus Aluminium. Als typische, in den Zusammensetzungen der vorliegenden Erfindung einsetzbare Silberdollar-Pigmente sind beispielsweise die von der Firma Eckart als 3000er-Typen unter den Handelsnamen Hydrolux, Hydrolan oder Hydrolac (für Wasserbasislack stabilisierte Typen) vertriebenen Pigmente, geeignet.

Ganz besonders bevorzugt werden als Metalleffektpigmente (B) solche mit Silberdollar-Morphologie eingesetzt, die eine enge Teilchengrößenverteilung aufweisen. Die Teilchengrößenverteilung lässt sich messtechnisch als Summendurchgangskurve darstellen, bei der der Prozentsatz der Teilchen unterhalb einer bestimmten Größe jeweils aufsummiert wird. Zur vereinfachten Beschreibung der Summendurchgangskurve werden drei Werte herangezogen: $D_{10}$ als Maß für die Feinheit, $D_{50}$ als mittlere Pigmentfeinheit/Mittelwert und $D_{90}$ zur Charakterisierung des Grobanteils im Pigment. Diese Werte beschreiben die Größenverteilung aller Metallpigmente mit hinreichender Genauigkeit. $D_{50}$-Werte liegen für Nasslackanwendungen zwischen ca. 5 $\mu$m und üblicherweise 55 $\mu$m. Bevorzugt sind in der vorliegenden Erfindung Metalleffektpigmente (B) mit $D_{50}$-Werten bis 30$\mu$m. Der Abstand zwischen $D_{10}$- und $D_{90}$-Werten charakterisiert die Breite der Teilchengrößenverteilung. Je geringer der Abstand zwischen $D_{10}$- und $D_{90}$-Wert ist, desto enger ist die Teilchengrößenverteilung, das heißt je kleiner der Quotient aus $D_{90}$- und $D_{10}$-Wert ist, desto enger ist die Teilchengrößenverteilung und desto bevorzugter sind die Teilchen in den erfindungsgemäßen Zusammensetzungen einsetzbar.

Die $D_{10}$-, $D_{50}$- und $D_{90}$-Werte werden mittels Lasergranulometrie bestimmt. Die Bestimmung der Partikelgrößenverteilung erfolgt durch Auswertung der Streulichtintensität von Beugungsmustern in Abhängigkeit vom Streuwinkel. Hierbei wird das Laser-Granulometer Cilas 1064 der Firma Quantachrome eingesetzt. Die Proben werden derart vorbereitet, dass 1,5 g des Metalleffektpigments (B) zunächst in 10 ml Isopropanol mit Hilfe eines Flachpinsels eindispergiert werden. Anschließend wird mit Isopropanol auf 100 ml Gesamtvolumen aufgefüllt und die Pigmentaufschlämmung im Becherglas 5 Minuten in einem Ultraschallbad (Bandelin Sonorex TK 52) homogenisiert. Nach Ende der Ultraschallbehandlung wird die Probe durch Rühren mit Hilfe eines Magnetrührers homogen gehalten. Die Messung der Partikelgrößenparameter erfolgt mit Hilfe der geräteeigenen Cilas-Software, wobei als Messbereich in der Standardarbeitsanweisung (SOP) "A1" gewählt wird. Die Messung erfolgt in gereinigten Küvetten, wobei die Pigmentdispersion im Kreislauf durch die Messküvette geführt wird. Die Auswertung der Messung erfolgt automatisch durch die dem Lasergranulometer-eigene Software. Erhalten werden die Werte "Diameter at 10%" ($D_{10}$), "Diameter at 50%" ($D_{50}$), und "Diameter at 90%" ($D_{90}$).

Besonders überraschend war, dass trotz enger Teilchengrößenverteilung ein ausreichend gutes Deckvermögen erhalten werden konnte.

Vorzugsweise weist das blättchenförmige Metalleffektpigment (B) einen Quotienten $D_{90}/D_{10}$ von kleiner 4,5 besonders bevorzugt von kleiner 4 und ganz besonders bevorzugt von 2 bis 3 auf.

Typische blättchenförmige Metalleffektpigmente (B) sind beispielsweise Hydrolux 3590 ($D_{10}$ = 7 $\mu$m, $D_{50}$ = 12 $\mu$m und $D_{90}$ = 18 $\mu$m) oder Hydrolan 3560 ($D_{10}$ = 10 $\mu$m, $D_{50}$ = 15 $\mu$m und $D_{90}$ = 24 $\mu$m).

Der Gehalt der erfindungsgemäßen Zusammensetzungen an den blättchenförmigen Metalleffektpigmenten (B) richtet sich wie oben beschrieben insbesondere nach dem Bindemittelgehalt. Auf die erfindungsgemäße Zusammensetzung als Ganze bezogen beträgt der Gehalt an (B) 1,2 bis 2,3 Gew.-%.

Werden als Metalleffektpigmente (B) die bevorzugten Silberdollar-Aluminiumpigmente eingesetzt, so liegen diese vorzugsweise oberflächenpassiviert vor. Eine Oberflächenpassivierung derartiger Pigmente wird beispielsweise in WO 2005/118722 (Seite 7, Zeilen 17 bis 29) beschrieben. Die Teilchengrößenverteilung sowie die $D_{10}$-, $D_{50}$- und $D_{90}$-Werte werden dabei an den bereits oberflächenpassivierten bzw. oberflächenmodifizierten Pigmenten bestimmt.

Als Verdicker (C) (auch als Verdickungsmittel (C) bezeichnet) wird mindestens ein anorganischer Verdicker (C1) gewählt aus der Gruppe der Schichtsilikate eingesetzt. Insbesondere eignen sich Schichtsilikate der Untergruppe der Smektite, insbesondere mit den Untergruppen Montmorillonit, Hektorit und dem synthetischen Laponit. Ein typischer Vertreter der anorganischen Verdicker ist ein unter dem Handelsnamen Laponite RD® erhältliches Natrium-Magnesium-Schichtsilikats.

Neben den anorganischen Schichtsilikaten (C1) müssen erfindungsgemäß ein oder mehrere organische Verdicker (C2) eingesetzt werden. Diese werden vorzugsweise gewählt aus der Gruppe bestehend aus (Meth)acrylsäure-(Meth)acrylat-Copolymerisat-Verdickern, wie beispielsweise dem Handelsprodukt Viscalex HV30 (Ciba, BASF) und Polyurethanverdickern, wie beispielsweise dem Handelsprodukt Nopco ® DSX 1550 der Firma Cognis.

Als (Meth)acrylsäure-(Meth)acrylat-Copolymerisat-Verdicker (C2) werden solche bezeichnet, die neben Acrylsäure und/oder Methacrylsäure auch ein oder mehrere Acrylsäureester (das heißt Acrylate) und/oder ein oder mehrere Methacrylsäureester (das heißt Methacrylate) einpolymerisiert enthalten. Den (Meth)acrylsäure-(Meth)acrylatCopolymerisat-Verdickern gemein ist, dass diese in alkalischem Medium, das heißt bei pH-Werten > 7, insbesondere > 7,5 durch Salzbildung der Acrylsäure und/oder Methacrylsäure, das heißt durch die Bildung von Carboxylatgruppen einen starken Viskositätsanstieg zeigen. Werden (Meth)acrylsäureester eingesetzt, die aus (Meth)acrylsäure und einem $C_1$-$C_6$-Alkanol gebildet werden, so erhält man im wesentlichen nicht-assoziativ wirkende (Meth)acrylsäure-(Meth)acrylat-Copolymerisat-Verdicker, wie beispielsweise das oben genannte Viscalex HV30. Im wesentlichen nicht-assoziativ wirkende (Meth)acrylsäure-(Meth)acrylatCopolymerisat-Verdicker werden in der Literatur auch als ASE-Verdicker ("Alkali Soluble/Swellable Emulsion", alkalisch lösliche/quellbare Emulsion oder Dispersion) bezeichnet. Diese sind in der vorliegenden Erfindung als (Meth)acrylsäure-(Meth)acrylat-Copolymerisat-Verdicker bevorzugt. Als (Meth)acrylsäure-(Meth)acrylat-Copolymerisat-Verdicker sind jedoch auch sogenannte HASE-Verdicker ("Hydrophobically Modified Anionic Soluble Emulsions", hydrophob modifizierte anionisch lösliche Emulsion oder Dispersion) einsetzbar. Diese werden erhalten, wenn als Alkanol anstelle oder zusätzlich zu den $C_1$-$C_6$-Alkanolen solche mit einer größeren Anzahl an Kohlenstoffatomen, beispielsweise 7 bis 30, oder 8 bis 20 Kohlenstoffatomen eingesetzt werden. HASE-Verdicker wirken im wesentlichen assoziativ verdickend. Die erfindungsgemäß eingesetzten (Meth)acrylsäure-(Meth)acrylatCopolymerisat-Verdicker eignen sich aufgrund ihrer verdickenden Eigenschaften nicht als Bindemittel-Harze, sie fallen somit nicht unter die als Beimischung zu den Bindemitteln (A) erlaubten Poly(meth)acrylate und sind somit explizit verschieden zu allen anderen möglichen Poly(meth)acrylat-basierten Beimischungen, die in den erfindungsgemäßen Beschichtungsmittel-Zusammensetzungen eingesetzt werden können.

Als Polyurethanverdicker (C2) sind die in der Literatur als HEUR ("Hydrophobically Modified Ethylene Oxide Urethane Rheology Modifiers", hydrophob modifizierte Ethylenoxid-Urethan-Rheologieadditive) bezeichneten, assoziativ wirkenden Verdicker zu verstehen. Chemisch handelt es sich hierbei um nichtionische verzweigte oder unverzweigte Blockcopolymere aus Polyethylenoxid-Ketten, Polypropylenoxid-Ketten oder Poly(ethylenoxid-propylenoxid)-Ketten, die über Urethanbindungen miteinander verknüpft sind und die endständige langkettige Alkyl- oder Alkylengruppen mit 8 bis 30, vorzugsweise 10 bis 24 und besonders bevorzugt 12 bis 20 Kohlenstoffatomen oder Aryl- oder alkylierte Arylgruppen mit 6 bis 30, vorzugsweise 6 bis 20 Kohlenstoffatomen tragen. Typische Alkylgruppen sind beispielsweise Dodecyl- oder Stearyl-Gruppen, eine typische Alkylengruppe ist beispielsweise eine Oleylgruppe, eine typische Arylgruppe ist die Phenylgruppe und eine typische alkylierte Arylgruppe ist beispielsweise eine Nonylphenylgruppe. Die erfindungsgemäß eingesetzten Polyurethan-Verdicker eignen sich aufgrund ihrer verdickenden Eigenschaften und Struktur nicht als Bindemittel-Harze, insbesondere als Bindemitteln (A). Sie sind somit explizit verschieden zu allen anderen möglichen Polyurethanen, die in den erfindungsgemäßen Beschichtungsmittel-Zusammensetzungen eingesetzt werden können.

Ganz besonders bevorzugt wird als organischer Verdicker (C2) eine Kombination aus einem (Meth)acrylsäure-(Meth)acrylat-Copolymerisat-Verdicker und einem Polyurethanverdicker eingesetzt. In einer besonderen Ausführungsform wird ein ASE-Verdicker zusammen mit einem HEUR-Verdicker eingesetzt.

Die erfindungsgemäßen Zusammensetzungen sind wässrig, d. h., dass sie Wasser enthalten, worin die vorstehend beschriebenen Bestandteile (A), (B) und (C) dispergiert, emulgiert und/oder gelöst sind. Neben Wasser als flüssigem Hauptträgermedium können jedoch wasserlackübliche Mengen an organischen Lösemitteln enthalten sein.

Der Gehalt an organischen Lösemitteln sollte jedoch möglichst 25 Gew.-% bezogen auf das Gesamtgewicht der erfindungsgemäßen Zusammensetzung nicht überschreiten. Vorzugsweise liegt der Gehalt an organischen Lösemitteln bezogen auf das Gesamtgewicht der erfindungsgemäßen Zusammensetzung bei maximal 23 Gew.-%, besonders bevorzugt im Bereich von 22 bis 10 Gew.-% und ganz besonders bevorzugt bei 21 bis 12 Gew.-%.

Der Gesamtfestkörpergehalt aller nicht flüchtigen Bestandteile beträgt erfindungsgemäß 12,5 Gew.-% bis 17,0 Gew.-%, besonders bevorzugt 12,6 bis 17,0 Gew.-% und ganz besonders bevorzugt 13,0 bis 16,5 Gew.-%, jeweils bezogen auf das Gesamtgewicht der erfindungsgemäßen Zusammensetzung. Der Gesamtfestkörpergehalt lässt sich durch einstündiges Trocknen der Zusammensetzung bei 120 °C bestimmen.

Die erfindungsgemäßen Zusammensetzungen können noch mindestens eine weitere Komponente (D) enthalten. Im Falle der Verwendung fremdvernetzender Polyurethane (A) handelt es sich bei (D) um ein Vernetzungsmittel. Unter (D) fallen aber auch weitere gegebenenfalls neben dem Polyurethan-Bindemittel (A) enthaltende polyurethanfreie Bindemittel, wie beispielsweise Polyesterharze oder Poly(meth)acrylsäure- oder Poly(meth)acrylat-Harze.

Beispiele geeigneter Vernetzungsmittel (D) sind aus der deutschen Patentanmeldung DE 199 48 004 A1, Seite 14, Zeile 32, bis Seite 16, Zeile 14, bekannt. Vorzugsweise werden sie in den dort angegebenen Mengen verwendet. Als Vernetzungsmittel können auch unblockierte oder blockierte Polyisocyanate, Aminoplastharze, wie insbesondere MelaminFormaldehyd-Vernetzer oder TACT verwendet werden.

Nicht zuletzt können die erfindungsgemäßen Zusammensetzungen noch mindestens ein typisches Lackadditiv in wirksamen Mengen als Zusatzstoff (E) enthalten. Beispiele geeigneter Lackadditive (E) sind aus der deutschen Patentanmeldung DE 199 48 004 A1, Seite 16, Zeile 15, bis Seite 17, Zeile 5, bekannt. Andere Zusatzstoffe (E) umfassen beispielsweise auch Farbstoffe oder Farbpigmente organischer oder anorganischer Art. Als Zusatzstoffe (E) werden hierin jedoch nur solche verstanden, die verschieden von den unter die Bestandteile (A), (B), (C) und (D) zu subsumierenden Komponenten sind.

Komponente (E) kann somit auch von Komponente (B) verschiedene Effektpigmente enthalten. Da der Gehalt weiterer Effektpigmente zur Erzielung des Zwecks eines möglichst hohen metallischen Flops jedoch nicht notwendig ist, diesen sogar verhindern kann, sind solche erfindungsgemäßen Zusammensetzungen bevorzugt, die neben (B) keine weiteren Effektpigmente enthalten. Ist lediglich eine weitere Erhöhung des Flops erwünscht ohne den anderen anwendungstechnischen Parametern Rechnung zu tragen, so kann die Zumischung geringer Anteile an PVD-Metalleffektpigmenten zu einer weiteren Zunahme des Flops beitragen.

Die Herstellung der erfindungsgemäßen Zusammensetzungen erfolgt vorzugsweise mit Hilfe des erfindungsgemäßen Verfahrens. Dabei werden die vorstehend beschriebenen Bestandteile (A), (B) und (C) sowie gegebenenfalls (D) und/oder (E) in einem wässrigen Medium, insbesondere in Wasser, dispergiert, wonach man die resultierende Mischung homogenisiert. Methodisch gesehen, weist das erfindungsgemäße Verfahren keine Besonderheiten auf, sondern kann mit Hilfe der üblichen und bekannten Mischverfahren und Mischaggregate, wie Rührkesseln, Dissolvern, Rührwerksmühlen, Knetern, statischen Mischern oder Extrudern, durchgeführt werden.

Wegen der zahlreichen besonderen Vorteile der erfindungsgemäßen Zusammensetzungen und der mit Hilfe des erfindungsgemäßen Verfahrens hergestellten Zusammensetzungen, insbesondere der nach dem erfindungsgemäßen Verfahren hergestellten erfindungsgemäßen Zusammensetzungen, können diese zahlreichen Verwendungszwecken zugeführt werden.

Bevorzugt werden sie als Beschichtungsstoffe zur Herstellung einschichtiger und vorzugsweise mehrschichtiger, effektgebender Beschichtungen eingesetzt. Besonders bevorzugt werden sie dabei als Wasserbasislacke zur Herstellung effektgebender sowie farb- und effektgebender Basislackierungen innerhalb von Mehrschichtlackierungen, bevorzugt Mehrschichtlackierungen für Kraftfahrzeuge, insbesondere hochwertigen PKW, verwendet.

Ganz besonders bevorzugt werden die Mehrschichtlackierungen nach folgendem Verfahren hergestellt, wobei man

(1) mindestens einen erfindungsgemäßen Wasserbasislack auf ein grundiertes oder ungrundiertes Substrat appliziert, wodurch mindestens eine Wasserbasislackschicht (1) resultiert,

(2) mindestens einen Klarlack auf die Wasserbasislackschicht (1) appliziert, wodurch mindestens eine Klarlackschicht (2) resultiert, und

(3) zumindest die Wasserbasislackschicht(en) (1) und die Klarlackschicht(en) (2) gemeinsam härtet, wodurch die Basislackierung (1) und die Klarlackierung (2) resultieren.

Beim erfindungsgemäßen Verfahren zur Herstellung einer Mehrschichtlackierung erfolgt der Auftrag der einzelnen Lackschichten vorzugsweise im sogenannten Nass-in-nass-Verfahren. Beispiele solcher Nass-in-nass-Verfahren sind aus der deutschen Patentanmeldung DE 199 48 004 A1, Seite 17, Zeile 37, bis Seite 19, Zeile 22, bekannt.

In einer besonders bevorzugten Ausführungsform sind die Mehrschichtlackierungen erhältlich, indem das in obigem Schritt (1) eingesetzte grundierte Substrat ein mit einem Primer grundiertes Substrat ist, wobei der Primer in einem elektrostatischen Lackierverfahren (ESTA-Lackierung) aufgebracht wurde. Vorzugsweise werden zwei Primerschichten nacheinander mittels ESTA aufgebracht. Die Primerschicht bzw. Primerschichten besitzen bevorzugt jeweils eine Trockenschichtdicke von 10 bis 25 $\mu$m. Werden die vorzugsweise zwei Primerschichten aufgebracht, so besitzt davon vorzugsweise jede eine Trockenschichtdicke von 10 bis 25 $\mu$m, besonders bevorzugt jede eine Trockenschichtdicke von 15 bis 20 $\mu$m.

In dieser bevorzugten Ausführungsform der Mehrschichtlackierung wird anschließend die erfindungsgemäße Beschichtungsmittel-Zusammensetzung einmal, vorzugsweise zweimal in einer Trockenschichtdicke von jeweils 4 bis 9 $\mu$m, besonders bevorzugt 5 bis 8 $\mu$m aufgebracht. Hierbei ist das Aufbringen mittels ESTA oder pneumatisch möglich. Bei einem zweimaligen Auftrag kann dieser zweimal pneumatisch, zweimal mittels ESTA oder einmal mittels ESTA und einmal pneumatisch erfolgen. In letzterem Fall wird üblicherweise zunächst ein Auftrag mittels ESTA und der nachfolgende zweite Auftrag pneumatisch durchgeführt. Besonders vorteilhaft und überraschend ist es, dass sich die erfindungsgemäßen Beschichtungsmittel auch mittels ESTA auftragen lassen und dabei die gewünschten Eigenschaften ergeben,

Der in Schritt (2) der bevorzugten Ausführungsform aufgebrachte Klarlack wird vorzugsweise einschichtig, besonders bevorzugt mittels ESTA in einer Trockenschichtdicke von vorzugsweise 25 bis 60 $\mu$m, besonders bevorzugt 30 bis 45 $\mu$m und ganz besonders bevorzugt 35 bis 40 $\mu$m aufgebracht.

Eine so hergestellte bevorzugte erfindungsgemäße Mehrschichtlackierung besitzt dementsprechend ein oder zwei, vorzugsweise zwei Primerschichten mit einer Trockenschichtdicke von jeweils 10 bis 25 $\mu$m, besonders bevorzugt jeweils 15 bis 20 $\mu$m sowie ein oder zwei, vorzugsweise zwei auf der einzigen oder letzten Primerschicht aufgebrachte Lackschichten der erfindungsgemäßen Beschichtungsmittel-Zusammensetzung mit einer Gesamt-Trockenschichtdicke von jeweils 8 bis 18 $\mu$m, besonders bevorzugt jeweils 10 bis 16 $\mu$m und zuletzt eine Klarlackdeckschicht in einer Trockenschichtdicke von vorzugsweise 25 bis 60 $\mu$m, besonders bevorzugt 30 bis 45 $\mu$m und ganz besonders bevorzugt 35 bis 40 $\mu$m. Beim eingesetzten Klarlack handelt es sich um einen 2-Komponenten-Klarlack (2K-Klarlack) oder einen 1-Komponenten-Klarlack (1K-Klarlack), besonders bevorzugt einen 1K-Klarfack. Im Vergleich zu herkömmlichen Lackierungen besitzt diese besonders bevorzugte Mehrschichtlackierung eine deutlich geringere Schichtdicke bei nach wie vor hervorragenden Eigenschaften. Auch ist diese in weniger Arbeitsschritten erhältlich und hinsichtlich des Lackverbrauchs günstiger.

Vorzugsweise haben die resultierenden erfindungsgemäßen effektgebenden und farb- und effektgebenden Beschichtungen, insbesondere die erfindungsgemäßen Mehrschichtlackierungen, einen Flop-Index $FL_{X\text{-}Rite}$ von 15 oder höher, jeweils berechnet nach der Formel der Firma X-Rite:

$$FL_{X\text{-}Rite} = 2{,}69 \, (L^*_{15°} - L^*_{110°})^{1{,}11} / (L^*_{45°})^{0{,}86}.$$

Überraschenderweise zeigen die betreffenden erfindungsgemäßen farb- und effektgebenden Beschichtungen, insbesondere die erfindungsgemäßen Mehrschichtlackierungen im Vergleich zu lösemittelbasierten Lackierungen keine Hell-Dunkel-Schattierungen (Wolken) mehr.

Insgesamt weisen die erfindungsgemäßen effektgebenden Beschichtungen, insbesondere die erfindungsgemäßen Mehrschichtlackierungen, ein hervorragendes anwendungstechnisches Eigenschaftsprofil auf, das hinsichtlich der Mechanik, Optik, Korrosionsbeständigkeit, Zwischenschicht- und Klarlackhaftung sowie Substrathaftung hervorragend ausgewogen ist. Hervorzuheben ist dabei der hervorragende optische Gesamteindruck (Appearance) und das besonders stark ausgeprägte, vom Betrachtungswinkel abhängige Hell-Dunkel-Verhalten (metallischer Flop), der auf die von Lackstörungen freie erfindungsgemäße Basislackierung zurückzuführen ist. Außerdem zeigen die farb- und effektgebenden erfindungsgemäßen Beschichtungen, insbesondere die erfindungsgemäßen Mehrschichtlackierungen, ästhetisch besonders ansprechende, elegante, effektvolle Farbeffekte mit geringem Sparkle-Effekt (Glitzereffekt).

Beste Ergebnisse werden erhalten, wenn für die erfindungsgemäße Zusammensetzung die bevorzugten und/oder besonders bevorzugten weiter oben angegebenen Bereiche betreffend den Gesamtbindemittelgehalt, Gehalt an Polyurethan-Bindemittel (A), Gesamtfestkörpergehalt, Gehalt an blättchenförmigen Metallpigmenten (B), Lösemittelgehalt und insbesondere das Gewichtsverhältnis von (B) zum Gesamtbindemittelgehalt sowie das Verhältnis des anorganischen Verdickers (C1) zum organischen Verdicker (C2) und der Gesamtgehalt an Verdicker (C) bezogen auf den Gesamtbindemittelgehalt eingehalten werden.

Eine typische besonders bevorzugte erfindungsgemäße Zusammensetzung enthält daher beispielsweise:

- blättchenförmige Metalleffektpigmente (B) in einem Anteil von 9,1 bis 20 Gew.-% bezogen auf den Bindemittelgehalt und zwischen 1,2 und 2,3 Gew.-% bezogen auf das Gesamtgewicht der erfindungsgemäßen Zusammensetzung

- Bindemittel in einem Gesamtgehalt von 12 bis 14,5 Gew.-% bezogen auf das Gesamtgewicht der erfindungsgemäßen Zusammensetzung und erfüllt gegebenenfalls eines oder mehrere der folgenden Kriterien wie
- einen Gehalt von mindestens 30 Gew.-% an Polyurethan-Bindemitteln (B) bezogen auf den Gesamtbindemittelgehalt
- einen Gesamtfestkörpergehalt von 12,6 bis 17 Gew.-%
- ein Gewichtsverhältnis der organischen Verdicker (C2) zu anorganischen Verdickern (C1) von > 0,5
- einem Gesamtanteil an Verdicker (C) bezogen auf den Gesamtbindemittelgehalt von < 12,5 Gew.-% und
- einen Gehalt an organischen Lösungsmitteln von 12 bis 21 Gew.-% bezogen auf das Gesamtgewicht der Zusammensetzung.

Jeder der in der typischen besonders bevorzugten Zusammensetzung genannten Bereiche kann selbstverständlich innerhalb der erfindungsgemäßen Grenzen erweitert oder eingeschränkt werden. So lässt sich jeder einzelne der genannten Bereiche durch einen weiteren erfindungsgemäßen in der Beschreibung genannten Bereich ersetzen oder unter Einbezug einer der genannten Ober- oder Untergrenze einschränken, ohne dass hierdurch das Wesen der Erfindung verändert wird. Beste Ergebnisse, insbesondere hinsichtlich des metallischen Flops der Beschichtungen sowie der Haftungseigenschaften und Glanzerhaltung insbesondere nach verschiedenen Belastungstests (SKK-Test und WOM-Test) sind jedoch zu erwarten, wenn die besonders bevorzugten Bereiche eingehalten werden.

**Herstellung der Lacksysteme E (erfindungsgemäß) und V (Vergleich)**

Wasserbasislack E (erfindungsgemäß):

In einem Rührgefäß wurden 25 Gewichtsteile eines Verdickungsmittels (Paste eines Natrium-Magnesium-Schichtsilikats, Laponite® RD, 3-prozentig in Wasser) vorgelegt. Dazu wurden 19,80 Gewichtsteile der Polyurethandispersion gemäß der deutschen Patentanmeldung DE 40 09 858 A1, Spalte 16, Zeilen 10 bis 35, »C. Herstellung einer wässrigen Polyurethanharzdispersion«, unter Rühren hinzugegeben. Zur resultierenden Mischung wurden unter Rühren 0,94 Gewichtsteile des handelsüblichen Netzmittels Surfynol® 100 (50-prozentig in Butylglykol) und 4,2 Gewichtsteile deionisiertes Wasser hinzugegeben. Anschließend wurden eine Mischung aus 3,33 Gewichtsteilen eines handelsüblichen wasserverdünnbaren Melaminformaldehydharzes (Cymel® 327) und 1,00 Gewichtsteilen einer wässrigen Polyesterharzdispersion gemäß der deutschen Patentanmeldung DE 40 09 858 A1, Spalte 16, Zeile 37 bis 59, »D. Herstellung einer wässrigen Polyesterharzdispersion«, 2,1 Gewichtsteile Butylglykol, 0,94 Gewichtsteile des handelsüblichen Netzmittels Surfynol® 100 (50-prozentig in Butylglykol) und 0,2 Gewichtsteile Dimethylethanolamin (10-prozentig in deionisiertem Wasser) unter Rühren hinzugegeben. Die resultierende Mischung wurde mit 3,12 Gewichtsteilen des polyurethanmodifizierten Polyacrylatharzes gemäß der deutschen Patentanmeldung DE 44 37 535 A1, Seite 7, Zeile 55, bis Seite 8, Zeile 23, »D. Herstellung des erfindungsgemäßen polyurethanmodifizierten Polyacrylates«, versetzt. Zur resultierenden Mischung wurden unter Rühren 0,94 Gewichtsteile des handelsüblichen Netzmittels Surfynol® 100 (50-prozentig in Butylglykol), 1,24 Gewichtsteile einer 50-prozentigen Lösung des handelsüblichen assoziativen Polyurethanverdickers Nopco® DSX 1550 in Butylglykol und 0,52 Gewichtsteile des handelsüblichen, nicht assoziativ wirkenden Verdickers Viscalex® HV30 (Methacrylatcopolymerisat auf der Basis von $(C_1-C_6)$-Alkyl(meth)acrylat und (Meth)Acrylsäure) sowie portionsweise 18,72 Gewichtsteile Wasser hinzugegeben. Der resultierenden Mischung wurde eine Aluminiumeffekt-Pigmenteffektpaste aus 0,75 Gewichtsteilen Hydrolan 3560, 2,22 Gewichtsteilen Hydrolux 3590 der Firma Eckart, 2,98 Gewichtsteilen Propoxypropanol, 2,98 Gewichtsteilen Butylglykol und 5,9 Gewichtsteilen Mischlack der WO 2006/040284 A1 (Seite 14, Zeilen 17-27) unter Rühren zugegeben und anschließend noch 3,12 Isopronal zugegeben.

Die resultierende Mischung wurde homogenisiert.

Für die Applikation wurde der Wasserbasislack E mit einer zehnprozentigen wässrigen Dimethylethanolamin-Lösung und deionisiertem Wasser auf einen pH-Wert von 7,8 bis 8,2 und eine Applikationsviskosität von 65-75 mPas bei 23°C und einer Scherung von 1.000 s$^{-1}$ eingestellt.

Der nicht flüchtige Anteil (1 h 120°C) des E beträgt 14,6%.

Wasserbasislack V (Vergleich gemäß WO 2008/141768 A1):

In einem Rührgefäß wurden 26 Gewichtsteile eines Verdickungsmittels (Paste eines Natrium-Magnesium-Schichtsilikats, Laponite® RD, 3-prozentig in Wasser) vorgelegt. Dazu wurden 10 Gewichtsteile der Polyurethandispersion gemäß der deutschen Patentanmeldung DE 40 09 858 A1, Spalte 16, Zeilen 10 bis 35, »C. Herstellung einer wässrigen Polyurethanharzdispersion«, unter Rühren hinzugegeben. Zur resultierenden Mischung wurden unter Rühren 1,0 Gewichtsteile des handelsüblichen Netzmittels Surfynol® 100 (50-prozentig in Butylglykol) hinzugegeben. Anschließend wurden eine Mischung aus 1,7 Gewichtsteilen eines handelsüblichen wasserverdünnbaren Melaminformaldehydharzes (Cymel® 327) und 2,0 Gewichtsteilen einer wässrigen Polyesterharzdispersion gemäß der deutschen Patentanmeldung DE 40 09 858 A1, Spalte 16, Zeile 37 bis 59, »D. Herstellung einer wässrigen Polyesterharzdispersion«, 1,0 Gewichtsteile Butylglykol, 1,0 Gewichtsteile des handelsüblichen Netzmittels Surfynol® 100 (50-prozentig in Butylglykol) und 0,1 Gewichtsteile Dimethylethanolamin (10-prozentig in deionisiertem Wasser) unter Rühren hinzugegeben. Die resultierende Mischung wurde mit 1,6 Gewichtsteilen des polyurethanmodifizierten Polyacrylatharzes gemäß der deutschen Patentanmeldung DE 44 37 535 A1, Seite 7, Zeile 55, bis Seite 8, Zeile 23, »D. Herstellung des erfindungsgemäßen polyurethanmodifizierten Polyacrylates«, versetzt. Zur resultierenden Mischung wurden unter Rühren 1,5 Gewichtsteile des handelsüblichen Netzmittels Surfynol® 100 (50-prozentig in Butylglykol), 0,2 Gewichtsteile des handeslüblichen Radikalfängers Tinuvin 123, 0,7 Gewichtsteile einer 50-prozentigen Lösung des handelsüblichen assoziativen Polyurethanverdickers Nopco® DSX 1550 in Butylglykol und 0,3 Gewichtsteile des handelsüblichen, nicht assoziativ wirkenden Verdickers Viscalex® HV30 (Methacrylatcopolymerisat auf der Basis von $(C_1-C_6)$-Alkyl(meth)acrylat und (Meth)Acrylsäure) sowie portionsweise 43,3 Gewichtsteile Wasser hinzugegeben. Die resultierende Mischung wurde mit einer Paste aus 3,7 Gewichtsteilen eines blättchenförmigen Aluminiumeffektpigments (B), hergestellt nach einem PVD-Verfahren (Alu-Hydroshine® WS3001 der Firma Eckart) und 3,7 Gewichtsteilen einer Mischung gemäß der deutschen Patentanmeldung DE 102 40 972 A1, Seite 7, Absatz [0053], aus Viscalex® HV30, einem organischen Amin, Surfynol® 100, dem nicht-ionischen Tensid (Niotensid) Hydropalat® 3037 der Firma Cognis und Wasser versetzt.

Die resultierende Mischung wurde homogenisiert, wodurch der Wasserbasislack V resultierte.

Für die Applikation wurde der Wasserbasislack V mit einer zehnprozentigen wässrigen Dimethylethanolamin-Lösung und deionisiertem Wasser auf einen pH-Wert von 7,8 bis 8,2 und eine Applikationsviskosität von 30-40 mPas bei 23°C und einer Scherung von 1.000 $s^{-1}$ eingestellt.

Die folgende Übersicht stellt die Zusammensetzungen E und V hinsichtlich erfindungswesentlicher Unterschiede einander gegenüber:

## Übersicht

| Merkmal | E | V |
|---|---|---|
| Gehalt an B) bezogen auf den Bindemittelgehalt der Zusammensetzung (in Gew.-%) | 13,6% | 5,01% |
| Gesamtfestkörper der Zusammensetzung (in Gew.-%) | 14,6% | 7,9% |
| Gehalt der Summe der Verdicker C1) und C2) bezogen auf den Bindemittelgehalt der Zusammensetzung (in Gew.-%) | 8,8 | 14,1 |
| Gewichtsverhältnis C2) zu C1) | 0,547 | 0,338 |

**Herstellung der Mehrschichtlackierungen**

Für die Herstellung der Mehrschichtlackierungen wurden Basislacke E (erfindungsgemäß) und V (Vergleich) verwendet.

Erfindungsgemäße Mehrschichtlackierungen E-MSL-EP-2K und E-MSL-EP-1K

Auf Karosserieblechen der Abmessung 30 mal 70 cm, die mit einer üblichen und bekannten, kathodisch abgeschiedenen und eingebrannten Elektrotauchlackierung beschichtet worden waren, wurde ein handelsüblicher Wasserfüller der Firma BASF Coatings AG appliziert, wonach die resultierenden Füllerschichten während 5 Minuten bei 20°C und einer relativen Luftfeuchtigkeit von 65% abgelüftet und in einem Umluftofen während 20 Minuten bei 160°C eingebrannt werden. Nach dem Abkühlen der Karosseriebleche auf 20°C wurde der Wasserbasislack E in jeweils zwei Spritzgängen mit einem Auftragverhältnis von 60:40 appliziert. Der erste Auftrag erfolgte per elektrostatischer Hochrotation mit einer ECO Bell 2 der Firma Dürr (Abstand: 0,25 m; Ausflussmenge Lack: 150 ml/min; Drehzahl 45000 U/min-1; Spannung: 65kV). Anschließend wurde 30 s bei 20°C und einer relativen Luftfeuchtigkeit von 65% abgelüftet. Der zweite Auftrag erfolgte pneumatisch (Abstand: 0,3 m; Ausflussmenge Lack: 200 ml/min; Zerstäuberluftmenge: 240 Nl/min; Zerstäuberluftdruck: 4,8 bar; Hornluftmenge: 310 Nl/min; Hornluftdruck: 5,2 bar). Es resultiert eine Trockenschichtdicke von 12 μm. Anschließend wurden die Wasserbasislackschichten 10 min bei Raumtemperatur und 10 Minuten bei 80°C vorgetrocknet. Nach dem Abkühlen der Karosseriebleche auf 20°C wurden die Wasserbasislackschichten mit einem handelsüblichen Zweikomponentenklarlack der Firma BASF Coatings AG (resultierend in der erfindungsgemäßen Mehrschichtlackierung E-MSL-EP-2K) oder einem handelsüblichen Einkomponentenklarlack (resultierend in der erfindungsgemäßen Mehrschichtlackierung E-MSL-EP-1K) entsprechend einer Trockenschichtdicke von 40 μm, überschichtet. Danach wurden die Füllerschichten, Wasserbasislackschichten und die Klarlackschichten während 30 Minuten bei 140°C (Zweikomponentenklarlack) bzw. 30 Minuten bei 130°C (Einkomponentenklarlack) eingebrannt.

Vergleichs-Mehrschichtlackierungen V-MSL-PP-2K, V-MSL-PP-1K, V-MSL-EP-2K und V-MSL-EP-1 K

Auf Karosserieblechen der Abmessung 30 mal 70 cm, die mit einer üblichen und bekannten, kathodisch abgeschiedenen und eingebrannten Elektrotauchlackierung beschichtet worden waren, wurde ein handelsüblicher Wasserfüller der Firma BASF Coatings AG appliziert, wonach die resultierenden Füllerschichten während 5 Minuten bei 20°C und einer relativen Luftfeuchtigkeit von 65% abgelüftet und in einem Umluftofen während 20 Minuten bei 160°C eingebrannt wurden. Nach dem Abkühlen der Karosseriebleche auf 20°C wurde der Wasserbasislack V in jeweils zwei Spritzgängen appliziert. Der erste Auftrag erfolgte pneumatisch (Abstand: 0,5 m; Ausflussmenge Lack: 300 Nl/min; Zerstäuberluftmenge: 320 Nl/min; Zerstäuberluftdruck: 4,8 bar; Hornluftmenge: 380 Nl/min; Hornluftdruck: 5,2 bar), entsprechend einer Trockenschichtdicke von 2 bis 3 $\mu$m. Anschließend wurde während 2 Minuten bei 20°C und einer relativen Luftfeuchtigkeit von 65% abgelüftet. Der zweite Auftrag erfolgte ebenfalls pneumatisch unter den vorstehend genannten Bedingungen, entsprechend einer Trockenschichtdicke von 2 bis 3 $\mu$m. Anschließend wurden die Wasserbasislackschichten während 10 Minuten bei 80°C vorgetrocknet. Nach dem Abkühlen der Karosseriebleche auf 20°C wurden die Wasserbasislackschichten mit einem handelsüblichen Zweikomponentenklarlack der Firma BASF Coatings AG (resultierend in der Vergleichs-Mehrschichtlackierung V-MSL-PP-2K) oder einem handelsüblichen Einkomponentenklarlack (resultierend in der Vergleichs-Mehrschichtlackierung V-MSL-PP-1 K) entsprechend einer Trockenschichtdicke von 40 $\mu$m, überschichtet. Danach wurden die Füllerschichten, Wasserbasislackschichten und die Klarlackschichten während 30 Minuten bei 140°C (Zweikomponentenklarlack) und 30min bei 130°C (Einkomponentenklarlack) eingebrannt.

In einem zweiten Versuch wurde das Vergleichsbeispiel auch wie das erfindungsgemäße Beispiel mit ESTA/Pneumat (resultierend in den Vergleichs-Mehrschichtlackierung V-MSL-EP-2K (mit 2K-Klarlack) bzw. V-MSL-EP-1K (mit 1K-Klarlack)) lackiert. Die Ausflussraten wurden dem Festkörpergehalt entsprechend angepasst. Es resultierte eine Basislackschichtdicke von 6$\mu$m.

**Vergleich der erfindungsgemäßen Mehrschichtlackierungen mit den Vergleichsmehrschichtlackierungen**

Alle Mehrschichtlackierungen wurden mit Hilfe eines Spektralphotometers der Firma X-Rite (MA48 Multi-Angle Spectrophotometer) vermessen. Aus den anhand der Mehrschichtlackierungen ermittelten Helligkeitswerten für die Betrachtungswinkel 15°, 45° und 110° kann der so genannte Flop-Index nach X-Rite nach der Formel

$$FL_{X\text{-}Rite} = 2{,}69\ (L^*_{15^\circ} - L^*_{110^\circ})^{1,11}/(L^*_{45^\circ})^{0,86}$$

berechnet werden.

Das hinsichtlich des Vergleichs-Wasserbasislacks ausschließlich pneumatisch applizierte Vergleichsbeispiel V-MSL-PP-2K des wässrigen Basislacks auf Basis von PVD-Aluminium-Pigmenten, erzielte einen $FL_{X\text{-}Rite}$- = 26.

Beim kombinierten Auftrag des wässrigen Basislacks auf Basis von PVD-Aluminium-Pigmenten mittels ESTA und Pneumat (Vergleichsbeispiel: V-MSL-EP-2K) reduzierte sich dieser Wert auf $FL_{X\text{-}Rite}$ = 20.

Mit dem Messgerät BYKmac der Firma Byk Gardner wurde die Körnigkeit (Graininess) gemessen. Für die visuelle Wahrnehmung der Grobheit ist der Aufsichtswinkel bei 15° besonders wichtig. Bei Metallic-Lacken beschreibt der SG-15°-Wert der sich aus der Sparkle-Fläche und der Intensität berechnet, die Homogenität, d.h. das Non-Sparkle-Verhalten (Streuung) der Lackierung. Alle diesbezüglichen Messungen erfolgten mit dem Gerät BYKMac der Firma Byk-Gardner nach den der Dokumentation des Geräts zu entnehmenden Vorgehensweisen.

Die Tabelle 1 gibt einen Überblick über die erhaltenen Werte des Flop-Index nach X-Rite und den für die Bildung von Hell-Dunkel-Schattierungen (Wolken) wesentlichen Helligkeitswert $L^*_{15^\circ}$ sowie die Graininess und den SG-15°-Wert.

**Tabelle 1**

| Probe | $L^*_{15^\circ}$ | $FL_{X\text{-}Rite}$ | Graininess | SG-15°-Wert |
|---|---|---|---|---|
| E-MSL-EP-2K | 150,6 | 17,5 | 3,1 | 1,33 |
| V-MSL-EP-2K | 150,6 | 20,0 | 2,85 | 0,88 |
| Ford Moondust Masterpanel | 137,4 | 14,3 | 3,74 | 2,96 |
| BMW Titansilber II Masterpanel | 121,2 | 11,6 | 3,72 | 2,03 |

Die erfindungsgemäße Mehrschichtlackierung E-MSL-EP-2K zeigt einen ähnlich guten Effekt wie die PVD-Metalleffektpigment-basierte Vergleichs-Mehrschichtlackierung V-MSL-EP-2K, der von silberfarbenen Mehrschichtlackierungen des Stands der Technik (Ford, BMW) in der Kombination von Feinheit (Homogenität, charakterisiert durch den SG-15°-Wert) oder visueller Beurteilung, Helligkeit ($L^*_{15°}$) und Flopindex ($FL_{X-Rite}$) nicht annähernd erreicht wird.

Außerdem wurden die Mehrschichtlackierungen E-MSL-EP-2K und V-MSL-EP-2K in einem ersten Versuch für 4000 Stunden einer Weather-OMeter®-Bewitterung mittels eines Weather-OMeters der Firma Atlas Material Testing Technology LLC (WOM-Bewitterung nach SAE J 2527-04) unterworfen und in einem sich anschließenden Schritt für 72 Stunden einem Schwitzwasserkonstantklima-Test (SKK-Test; gemäß DIN EN ISO 6270-2 unterworfen. Vor der WOM-Bewitterung, direkt nach der WOM-Bewitterung und direkt nach dem SKK-Test wurde die Haftfestigkeit im Gitterschnitt-Test nach DIN EN ISO 2409, der Glanz unter einem Winkel von 20° sowie der Blasengrad nach DIN EN ISO 4628-2 bestimmt. Die Ergebnisse sind in Tabelle 2 zusammengefasst.

**Tabelle 2**

| Probe | vor dem WOM-Test | nach 4000 Stunden WOM-Test | | nach zusätzlichen 72 Stunden SKK-Test | | |
|---|---|---|---|---|---|---|
| | Haftfestigkeit (Gitterschnitt) | Haftfestigkeit (Gitterschnitt) | Glanz 20° | Haftfestigkeit (Gitterschnitt) | Glanz 20° | Blasengrad |
| E-MSL-EP-2K | GT0 | GT0 | 98% | GT1 | 91 % | M0G0 |
| V-MSL-EP-2K | GT0 | GT2 | 99% | GT5 | 86% | M0G0 |

In den Tabellen 3 und 4 werden die mit dem 1K-Klarlack beschichteten erfindungsgemäßen und Vergleichs-Mehrschichtlackierungen den bereits oben beschriebenen Test-Verfahren (jedoch für abweichende Zeiträume) unterzogen.

**Tabelle 3**

| Probe | Vor dem SKK-Test | Nach 10 Tagen SKK-Test | | | |
|---|---|---|---|---|---|
| | Haftfestigkeit (Gitterschnitt) | Haftfestigkeit (Gitterschnitt) | Glanz 20° | Blasengrad | Steinschlagfestigkeit |
| E-MSL-EP-1K | GT0 | GT0 | 98 % | M0G0 | 1,5 |
| V-MSL-EP-1K | GT0 | GT5 | 97 % | M3G2 | 3 |

Die Glanzmessung erfolgte nach DIN 67530.

Die Steinschlagfestigkeit wurde nach DIN EN ISO 20567-1 (Verfahren A) bestimmt. Je höher der Wert, desto schlechter ist die Steinschlagfestgkeit.

**Tabelle 4**

| Probe | vor dem 3000-Stunden WOM-Test | nach 3000 Stunden WOM-Test | | nach zusätzlichen 72 Stunden SKK-Test | | |
|---|---|---|---|---|---|---|
| | Haftfestigkeit (Gitterschnitt) | Haftfestigkeit (Gitterschnitt) | | Haftfestigkeit (Gitterschnitt) | Glanz 20° | Blasengrad |
| E-MSL-EP-1K | GT0 | GT0 | | GT1 | 90% | M0G0 |
| V-MSL-EP-1K | GT0 | GT5 | | GT5 | 69 % | M3G2 |

Wie den in Tabellen 3 und 4 enthaltenen Meßergebnissen entnommen werden kann, sind insbesondere die Haftfestigkeit (im Gitterschnitt-Test) und der Glanz (bei 20°) der erfindungsgemäßen Beschichtungsmittel bei der Verwendung von Einkomponenten-Klarlacken nach dem SKK-Test bzw. einer Kombination aus WOM- und SKK-Test deutlich höher. Auch neigen die erfindungsgemäßen Mehrschichtlackierungen nicht zur Blasenbildung.

**Prüfung auf Schleifflecken und Schleifriefenabdeckung mit Schleifpapier (800er Körnung) nach der Prüf-Vorschrift Nr. 4.7.3 der Firma Audi**

**Tabelle 5**

| Probe | Schleiffleck im Klarlack | Schleifriefen im Klarlack | Schleiffleck im Füller | Schleifriefen im Füller |
|---|---|---|---|---|
| E-MSL-EP-2K | 3 | 3 | 3 | 3 |
| V-MSL-EP-2K | 6 | 6 | 6 | 6 |

Die Bewertung erfolgte nach dem "Schulnoten"-Prinzip (1 = nicht sichtbar bis 6 = deutlich sichtbar).

Alle untersuchten, erfindungsgemäßen Lacke wiesen eine gute Ringleitungsstabilität und Standsicherheit auf. Auch sind alle Anforderungen hinsichtlich Wolkenneigung und Kocherbildung, die an Lacke in der Automobilserienlackierung gestellt werden, erfüllt.

**Patentansprüche**

1. Thermisch und/oder physikalisch härtbare wässrige Beschichtungsmittel-Zusammensetzungen enthaltend

   A) mindestens ein Polyurethan, ausgewählt aus der Gruppe, bestehend aus physikalisch härtbaren, thermisch selbstvernetzenden und/oder thermisch fremdvernetzenden, gesättigten, ungesättigten und/oder mit olefinisch ungesättigten Verbindungen gepfropften, ionisch und/oder nichtionisch stabilisierten Polyurethanen, als Bindemittel,
   B) mindestens ein blättchenförmiges, nicht über ein PVD-Verfahren hergestelltes Metalleffektpigment, und
   C) mindestens einen anorganischen Verdicker C1) gewählt aus der Gruppe der Schichtsilikate und mindestens einen organischen Verdicker C2) gewählt aus der Gruppe der (Meth)acrylsäure-(Meth)acrylat-Copolymerisat-Verdicker und Polyurethanverdicker,

   wobei

   i) Der Gehalt an B), bezogen auf den Gesamtbindemittelgehalt der Beschichtungsmittel-Zusammentsetzung > 9 Gew.-% beträgt,
   ii) der Gesamtfestkörper bezogen auf die Beschichtungsmittel-Zusammensetzung 12,5 Gew.-% bis 17,0 Gew.-% beträgt,
   iii) der Gesamtgehalt der Verdicker aus C1) und C2), bezogen auf den Gesamtbindemittelgehalt der Beschichtungszusammensetzung < 12,5 Gew.-% beträgt,
   iv) das Gewichtsverhältnis C2) zu C1) > 0,4 beträgt und
   v) der Gehalt an B), bezogen auf die Beschichtungsmittel-Zusammensetzung 1,2 bis 2,3 Gew.-% beträgt.

2. Zusammensetzungen nach Anspruch 1, **dadurch gekennzeichnet, dass** das blättchenförmige Metalleffektpigment (B) ein Aluminiumeffektpigment mit Silberdollar-Morphologie ist.

3. Zusammensetzungen nach Anspruch 1 oder 2, **dadurch gekennzeichnet, dass** das blättchenförmige Metalleffektpigment (B) eine Teilchengrößenverteilung charakterisiert durch $D_{90}/D_{10}$ < 4,5 besitzt.

4. Zusammensetzungen nach einem der Ansprüche 1 bis 3, **dadurch gekennzeichnet, dass** das blättchenförmige Metalleffektpigment (B) eine mittlere Pigmentfeinheit $D_{50}$ von 5 bis 30 $\mu$m aufweist.

5. Zusammensetzungen nach einem der Ansprüche 1 bis 4, **dadurch gekennzeichnet, dass** als Verdicker C2) ein (Meth)acrylsäure-(Meth)acrylat-Copolymerisat-Verdicker eingesetzt wird, in welchem als (Meth)acrylate solche einpolymerisiert sind, die aus (Meth)acrylsäure und einem $C_1$-$C_6$-Alkanol und/oder einem $C_7$-$C_{30}$-Alkanol gebildet sind und/oder
   dass als Verdicker C2)
   ein hydrophob modifiziertes Ethylenoxid-Urethan (HEUR), wobei neben oder anstelle von Ethylenoxid- auch Propylenoxid-Einheiten enthalten sein können, eingesetzt wird.

6. Zusammensetzungen nach einem oder mehreren der Ansprüche 1 bis 5, **dadurch gekennzeichnet, dass** sich beim organischen Verdicker C2) um eine Mischung eines (Meth)acrylatcopolymerisats und Polyurethans handelt.

7. Verfahren zur Herstellung von Zusammensetzungen gemäß einem der Ansprüche 1 bis 6, **dadurch gekennzeichnet, dass** man mindestens ein Polyurethan (A) und mindestens ein blättchenförmiges Metalleffektpigment (B) sowie Verdicker (C) in einem wässrigen Medium dispergiert werden und die resultierende Mischung homogenisiert wird.

8. Verwendung der Zusammensetzungen gemäß einem der Ansprüche 1 bis 6 und der nach dem Verfahren gemäß Anspruch 7 hergestellten Zusammensetzungen als Beschichtungsstoffe und zur Herstellung von Beschichtungen.

9. Verwendung nach Anspruch 8, **dadurch gekennzeichnet, dass** die Beschichtungsstoffe der Herstellung einschichtiger und mehrschichtiger effektgebender oder farb- und effektgebender Beschichtungen dienen.

10. Verfahren zur Herstellung von Mehrschichtlackierungen durch wobei:

(1) mindestens ein Wasserbasislack auf ein grundiertes oder ungrundiertes Substrat appliziert wird, wodurch mindestens eine Wasserbasislackschicht (1) resultiert,
(2) mindestens ein Klarlack auf die Wasserbasislackschicht(en) (1) appliziert wird, wodurch mindestens eine Klarlackschicht (2) resultiert, und
(3) zumindest die Wasserbasislackschicht(en) (1) und die Klarlackschicht(en) (2) gemeinsam härtet, wodurch die Basislackierung (1) und die Klarlackierung (2) resultieren,

**dadurch gekennzeichnet, dass**
als Wasserbasislacke zur Herstellung der Wasserbasislackschicht(en) (1) Zusammensetzungen nach einem oder mehreren der Ansprüche 1 bis 6 oder hergestellt nach Anspruch 7 eingesetzt werden.

11. Verfahren nach Anspruch 10, wobei mindestens eine Wasserbasislackschicht (1) mittels ESTA aufgetragen wurde.

12. Mehrschichtlackierung erhältlich durch das Verfahren nach Anspruch 11.

## Claims

1. Thermally and/or physically curable aqueous coating material compositions comprising

A) at least one polyurethane selected from the group consisting of physically curable, thermally self-crosslinking and/or thermally externally crosslinking, ionically and/or nonionically stabilized polyurethanes which are saturated, unsaturated and/or grafted with olefinically unsaturated compounds, as binder,
B) at least one laminar metallic effect pigment not produced via a PVD process, and
C) at least one inorganic thickener C1) selected from the group of the phyllosilicates, and at least one organic thickener C2) selected from the group of the (meth) acrylic acid-(meth)acrylate copolymer thickeners and polyurethane thickeners,

where

i) the amount of B), based on the total binder content of the coating material composition, is > 9% by weight,
ii) the total solids based on the coating material composition is 12.5% by weight to 17.0% by weight,
iii) the total amount of the thickeners C1) and C2), based on the total binder content of the coating composition, is < 12.5% by weight,
iv) the weight ratio of C2) to C1) is > 0.4, and
v) the amount of B), based on the coating material composition, is 1.2 to 2.3% by weight.

2. Compositions according to Claim 1, **characterized in that** the laminar metallic effect pigment (B) is an aluminum effect pigment with silver dollar morphology.

3. Compositions according to Claim 1 or 2, **characterized in that** the laminar metallic effect pigment (B) possesses a particle size distribution **characterized by** $D_{90}/D_{10} < 4.5$.

4. Compositions according to any of Claims 1 to 3, **characterized in that** the laminar metallic effect pigment (B) has an average pigment fineness $D_{50}$ of 5 to 30 $\mu$m.

5. Compositions according to any of Claims 1 to 4, **characterized in that** use is made as thickener C2) of a (meth)acrylic acid-(meth)acrylate copolymer thickener in which (meth)acrylates copolymerized are those formed from (meth)acrylic acid and a $C_1$-$C_6$ alkanol and/or a $C_7$-$C_{30}$ alkanol
   and/or
   use is made as thickener C2)
   of a hydrophobically modified ethylene oxide-urethane (HEUR) in which instead of or in addition to ethylene oxide units there may also be propylene oxide units present.

6. Compositions according to one or more of Claims 1 to 5, **characterized in that** the organic thickener C2) is a mixture of a (meth)acrylate copolymer and polyurethane.

7. Process for preparing compositions according to any of Claims 1 to 6, **characterized in that** at least one polyurethane (A) and at least one laminar metallic effect pigment (B) and also thickener(s) (C) are dispersed in an aqueous medium and the resulting mixture is homogenized.

8. Use of the compositions according to any of Claims 1 to 6 and of the compositions as prepared by the process according to Claim 7 as coating materials and for producing coatings.

9. Use according to Claim 8, **characterized in that** the coating materials serve for producing single-coat and multicoat effect coatings, or color and effect coatings.

10. Process for producing multicoat paint systems, by:

    (1) applying at least one aqueous basecoat material to a primed or unprimed substrate, to give at least one aqueous basecoat film (1),
    (2) applying at least one clearcoat material to the aqueous basecoat film(s) (1), to give at least one clearcoat film (2), and
    (3) jointly curing at least the aqueous basecoat film(s) (1) and the clearcoat film(s) (2) to give the basecoat (1) and the clearcoat (2), cha

    racterized in that
    compositions according to one or more of Claims 1 to 6 or prepared according to Claim 7 are used as aqueous basecoat materials for producing the aqueous basecoat film(s) (1).

11. Process according to Claim 10, at least one aqueous basecoat film (1) being applied by means of ESTA.

12. Multicoat paint system obtainable by the process according to Claim 11.


**Revendications**

1. Compositions aqueuses thermodurcissables et/ou durcissables par voie physique d'agent de revêtement, contenant

   A) au moins un polyuréthane, choisi dans le groupe constitué par les polyuréthanes durcissables par voie physique, thermiquement autoréticulants et/ou thermiquement réticulants sous l'effet d'une substance étrangère, saturés, insaturés et/ou greffés par des composés oléfiniquement insaturés, stabilisés de manière ionique et/ou non ionique, comme liant,
   B) au moins un pigment à effet métallique sous forme de petites feuilles, non produit par un procédé de dépôt en phase vapeur
   C) au moins un épaississant inorganique C1) choisi dans le groupe des silicates à couches et au moins un épaississant organique C2) choisi dans le groupe des épaississants de type copolymère d'acide (méth)acrylique-(méth)acrylate et des épaississants de type polyuréthane,

   où

   i) la teneur en B), par rapport à la teneur totale en liant de la composition d'agent de revêtement, est > 9% en poids,
   ii) la totalité des solides, par rapport à la composition d'agent de revêtement, est de 12,5% en poids à 17,0% en poids,

iii) la teneur totale en épaississants de C1) et de C2), par rapport à la teneur totale en liant de la composition de revêtement, est < 12,5% en poids,
iv) le rapport pondéral de C2) à C1) est > 0,4 et
v) la teneur en B), par rapport à la composition d'agent de revêtement, est de 1,2% en poids à 2,3% en poids.

**2.** Compositions selon la revendication 1, **caractérisées en ce que** le pigment (B) à effet métallique en forme de petites feuilles est un pigment à effet d'aluminium présentant une morphologie lenticulaire.

**3.** Compositions selon la revendication 1 ou 2, **caractérisées en ce que** le pigment (B) à effet métallique en forme de petites feuilles présente une distribution granulométrique **caractérisée par** $D_{90}/D_{10} < 4,5$.

**4.** Compositions selon l'une quelconque des revendications 1 à 3, **caractérisées en ce que** le pigment (B) à effet métallique en forme de petites feuilles présente une finesse moyenne de pigment $D_{50}$ de 5 à 30 $\mu$m.

**5.** Compositions selon l'une quelconque des revendications 1 à 4, **caractérisées en ce qu'**on utilise, comme épaississant C2), un épaississant de type copolymère d'acide (méth)acrylique-(méth)acrylate, dans lequel on copolymérise, comme (méth)acrylates, ceux qui sont formés à partir d'acide (méth)acrylique et d'un $C_1$-$C_6$-alcanol et/ou d'un $C_7$-$C_{30}$-alcanol et/ou **en ce qu'**on utilise, comme épaississant C2), un oxyde d'éthylène-uréthane modifié de manière hydrophobe (HEUR), des unités d'oxyde de propylène pouvant être contenues en plus ou à la place des unités d'oxyde d'éthylène.

**6.** Compositions selon l'une ou plusieurs des revendications 1 à 5, **caractérisées en ce qu'**il s'agit, pour l'épaississant organique C2), d'un mélange d'un copolymère de (méth)acrylate et de polyuréthane.

**7.** Procédé pour la préparation de compositions selon l'une quelconque des revendications 1 à 6, **caractérisé en ce qu'**on disperse au moins un polyuréthane (A) et au moins un pigment (B) à effet métallique sous forme de petites feuilles ainsi que l'épaississant (C) dans un milieu aqueux et on homogénéise le mélange résultant.

**8.** Utilisation des compositions selon l'une quelconque des revendications 1 à 6 et des compositions préparées selon le procédé selon la revendication 7 comme substances de revêtement et pour la préparation de revêtements.

**9.** Utilisation selon la revendication 8, **caractérisée en ce que** les substances de revêtement servent à la production de revêtements monocouches et multicouches, conférant un effet ou conférant une couleur et un effet.

**10.** Procédé pour la production de laquages multicouches, dans lequel

(1) on applique au moins une laque à base d'eau sur un substrat apprêté ou non apprêté, suite à quoi on obtient au moins une couche de laque à base d'eau (1),
(2) on applique au moins une laque claire sur la ou les couches de laque à base d'eau (1), suite à quoi on obtient au moins une couche de laque claire (2) et
(3) on durcit, ensemble, au moins la ou les couches de laque à base d'eau (1) et la ou les couches de laque claire (2), suite à quoi on obtient le laquage de base (1) et le laquage clair (2),

**caractérisé en ce qu'**on utilise, comme laque à base d'eau pour la préparation de la ou des couches de laque à base d'eau (1), des compositions selon l'une ou plusieurs des revendications 1 à 6 ou préparées selon la revendication 7.

**11.** Procédé selon la revendication 10, au moins une couche de laque à base d'eau (1) étant appliquée par un procédé de laquage électrostatique (ESTA).

**12.** Laquage multicouche pouvant être obtenu par le procédé selon la revendication 11.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0826745 A2
- WO 2009100938 A1
- EP 1591492 A1
- WO 02053658 A2
- WO 2006017197 A1
- WO 2008141768 A1
- DE 10010416 A1
- DE 4009858 A1
- DE 4437535 A1
- DE 19914896 A1
- DE 10043405 C1
- DE 19948004 A1
- DE 10053890 A1
- DE 10223652 A1
- WO 2005118722 A
- WO 2006040284 A1
- DE 10240972 A1

**In der Beschreibung aufgeführte Nicht-Patentliteratur**

- Härtung. Römpp Lexikon Lacke und Druckfarben. Georg Thieme Verlag, 1998, 274, , 275
- Härtung. Römpp Lexikon Lacke und Druckfarben. Georg Thieme Verlag, 1998, 274-276
- PVD-Verfahren. Römpp Online. Georg Thieme Verlag, 2004